# EUROPEAN PATENT SPECIFICATION

(11) **EP 2 397 246 B1**
(45) Date of publication and mention of the grant of the patent: **21.02.2018**
(21) Application number: 10780571.5
(22) Date of filing: 26.05.2010
(51) Int. Cl.: B23B 27/18, B23B 27/20, B23K 1/00, B23K 1/19, B23K 1/20, B23K 3/04, B23K 20/00, B23K 35/32, B23K 20/02, B23K 20/16, B23K 20/22, B23K 31/02, B23K 101/20, B23K 103/18, B23K 101/34, B23K 103/00

(54) **METHOD FOR MANUFACTURING A JOINED BODY**
VERFAHREN ZUR HERSTELLUNG EINES VERBUNDKÖRPERS
PROCÉDÉ DE FABRICATION D'UN CORPS JOINT

(30) Priority: 27.05.2009 JP 2009127850
(43) Date of publication of application: 21.12.2011
(73) Proprietor: National Institute of Advanced Industrial Science and Technology, Tokyo 100-8921 (JP); Sumitomo Electric Industries, Ltd., Chuo-ku Osaka-shi Osaka 540-0041 (JP); Sumitomo Electric Hardmetal Corp., Itami-shi, Hyogo 664-0016 (JP)
(72) Inventor: OZAKI, Kimihiro, Nagoya-shi, Aichi 463-8560 (JP); KOBAYASHI, Keizo, Nagoya-shi, Aichi 463-8560 (JP); MORIGUCHI, Hideki, Itami-shi, Hyogo 664-0016 (JP); ISHIDA, Tomoyuki, Itami-shi, Hyogo 664-0016 (JP); IKEGAYA, Akihiko, Itami-shi, Hyogo 664-0016 (JP); FUKAYA, Tomohiro, Itami-shi, Hyogo 664-0016 (JP); HIRAO, Takashi, Itami-shi, Hyogo 664-0016 (JP); NAKASHIMA, Takeru, Itami-shi, Hyogo 664-0016 (JP); NISHIMURA, Mitsuo, Itami-shi, Hyogo 664-0016 (JP); FUJIMURA, Akio, Itami-shi, Hyogo 664-0016 (JP)
(74) Representative: Grünecker Patent- und Rechtsanwälte PartG mbB
(86) International application number: PCT/JP2010/058898
(87) International publication number: WO 2010/137616

(56) References cited:
- EP-A1- 0 706 850
- JP-A- 11 320 218
- JP-A- 61 183 177
- JP-A- H07 156 003
- JP-A- 2008 290 130
- JP-T- 2006 521 214
- US-A- 6 155 755
- US-A1- 2004 256 442

## Description

### TECHNICAL FIELD

The present invention relates to a method for manufacturing a joined product, and in particular, for manufacturing a joined product suitable for a cutting tool.

### BACKGROUND ART

A cutting tool having a tip to which a high hardness material is joined by brazing, as typified by a cBN (cubic boron nitride) or diamond cutting tool, has been conventionally manufactured and used for cutting processing of special steel and any other various materials.

Specifically, a tool formed by joining cBN and cemented carbide by brazing has been manufactured and sold, for example (e.g., IGETALLOY Cutting Tool ('07-'08 General Catalogue) issued by Sumitomo Electric Hardmetal Co., October, 2006, p. L4, Coated SUMIBORON Series (Non-Patent Literature 1)). Alternatively, a joined product formed by joining PCD (sintered diamond) or cBN and ceramics or cermet by brazing has been proposed (e.g., Japanese Patent Laying-Open No. 2002-36008 (Patent Literature 1) and Japanese Patent Laying-Open No. 11-320218 (Patent Literature 2)).

In addition, a cutting tool formed by joining cemented carbide or cermet and high-speed steel or the like by brazing with a Cu brazing filler has also been proposed (e.g., Japanese Patent Laying-Open No. 11-294058 (Patent Literature 3)). US 6 155 755 A1 discloses brazing of a sintered body of diamond or cBN (cubic boron nitride) to a cemented carbide. The brazing is carried out using a joining material in a temperature range of 800-1000 °C. The materials are heated and bonded in a vacuum.

### CITATION LIST

### PATENT LITERATURE

PTL 1: Japanese Patent Laying-Open No. 2002-36008
PTL 2: Japanese Patent Laying-Open No. 11-320218
PTL 3: Japanese Patent Laying-Open No. 11-294058
PTL 4: US 6 155 755 A1 NON PATENT LITERATURE NPL 1: IGETALLOY Cutting Tool ('07-'08 General Catalogue) issued by Sumitomo Electric Hardmetal Co., October, 2006, p. L4, Coated SUMIBORON Series

### SUMMARY OF INVENTION

### TECHNICAL PROBLEM

In many brazing fillers, however, the liquid phase appears at approximately 700 to 800°C. Therefore, it has been difficult to apply a cutting tool that uses a product joined by brazing to high-speed cutting and the like during which the aforementioned temperature may be exceeded. In addition, the liquid phase formed during brazing may leak and contaminate a material to be joined in some cases, which may result in an adverse effect during processing that is the subsequent step.

In addition, due to melting of the brazing filler, a cBN sintered compact or a diamond sintered compact moves back and forth and from side to side or is tilted with respect to a cemented carbide base material. Therefore, positioning of the cBN sintered compact with respect to the cemented carbide base material has been difficult and stabilization of the cutting edge position with respect to the cemented carbide base material has been difficult. For these reasons, there has been a problem of an increase in the amount of grinding and the grinding time of the material to be joined such as the cBN sintered compact after joining. In order to deal with this problem, preparation of a large cBN sintered compact or diamond sintered compact has been required at the time of joining, in view of the amount of movement and the amount of grinding of the cBN sintered compact or the diamond sintered compact.

In light of the above problems, an object of the present invention is to provide method for manufacturing a joined product suitable as a cutting tool that does not cause a reduction in joint strength of a joining layer even if a high temperature exceeding a temperature at which a brazing filler forms the liquid phase is reached during cutting, and further, that does not require preparation of a cBN sintered compact or diamond sintered compact having large grinding allowance.

### SOLUTION TO PROBLEM

As a result of earnest study, the present inventors have found that the above problems can be solved by the invention that will be described hereinafter.

The present invention will be described hereinafter.

A joined product according to the present invention is a joined product comprising a cemented carbide sintered compact serving as a first material to be joined and a cBN sintered compact or a diamond sintered compact serving as a second material to be joined, the first material to be joined and the second material to be joined being joined by a joining material that forms a liquid phase at a temperature exceeding 800°C and lower than 1000°C and that is placed between the first material to be joined and the second material to be joined, and the first material to be joined and the second material to be joined being joined by resistance heating and pressing at a pressure of 0.1 to 200 MPa.

In the present invention, the first material to be joined formed of the cemented carbide sintered compact and the second material to be joined formed of the cBN sintered compact or the diamond sintered compact are joined by the joining material that forms the liquid phase at a temperature exceeding 800°C and lower than 1000°C and that is placed between the first material to be joined and the second material to be joined. Therefore, unlike a conventional product joined by using a brazing filler that forms the liquid phase at 800°C or lower, a reduction in joint strength can be suppressed and there can be provided a cutting tool and the like suitable for high-speed cutting.

In addition, the thickness of the joining material can be controlled to 30 µm or smaller, and preferably 10 µm or smaller by resistance heating and pressing, and the position where the cBN sintered compact or the diamond sintered compact is joined to the cemented carbide base material can be stabilized. Therefore, the amount of grinding processing after joining can be reduced as compared with a case of brazing joining. In addition, the amount of movement and the amount of grinding of the cBN sintered compact can be designed to be a required minimum size, and the cBN sintered compact or the like can be made small. Thus, the amount of the used expensive cBN sintered compact or the like can be suppressed.

Since the cBN sintered compact or the diamond sintered compact serving as the second material to be joined is vulnerable to heat and is readily decomposed at a high temperature, the cBN sintered compact or the diamond sintered compact is susceptible to thermal degradation within a short time. Therefore, it has been difficult to obtain the joined product of the first material to be joined and the second material to be joined by brazing joining that requires a long time of 10 minutes or more for joining, through the use of the joining material that forms the liquid phase at a temperature exceeding 800°C and lower than 1000°C.

In the present invention, however, since joining is performed by resistance heating with the pressing force of 0.1 to 200 MPa applied between the first material to be joined and the second material to be joined, firm joining can be obtained within an extremely short time of several seconds to several minutes. The conduction time is preferably within one minute, and especially preferably within 30 seconds. Consequently, the cBN sintered compact or the diamond sintered compact that is a high-pressure-stable-type material can be joined to the cemented carbide by using the joining material that forms the liquid phase at a temperature exceeding 800°C and lower than 1000°C, without degradation in quality of the cBN sintered compact or the diamond sintered compact.

Excessively weak pressing force causes a problem such as an increase in contact resistance between electrodes and the cBN sintered compact or the diamond sintered compact and the cemented carbide sintered compact that serve as the materials to be joined, and a current does not flow or electrical discharge occurs. On the other hand, excessively strong pressing force causes a problem such as deformation of the cBN sintered compact and the cemented carbide sintered compact. In the present invention, since the preferable pressing force is 0.1 to 200 MPa, these problems do not arise and the preferable joined product can be obtained. The pressing force of 1 to 100 MPa is more preferable because appropriate contact resistance is obtained and heat is efficiently generated at the joint surface. The pressing force of 10 to 70 MPa is still more preferable because more appropriate contact resistance is obtained and deformation of the body to be joined becomes difficult.

A tool obtained by joining, to the cemented carbide, the cBN sintered compact or the diamond sintered compact including a metal binder such as Co and/or a sintered compact having a high cBN content exceeding 70% as the body to be joined has had a problem that when joining is performed by resistance heating at a temperature of 1000°C or higher, a crack appears in the cBN sintered compact or the diamond sintered compact, which makes excellent joining difficult. This is probably because a difference in thermal expansion coefficient is very large between cBN or diamond and the metal binder, and thus, the volume expansion of the metal binder becomes great as a result of heating to 1000°C or higher and a crack appears in the cBN sintered compact, or in the case of the cBN sintered compact having a cBN content exceeding 70%, a difference in thermal expansion coefficient is large between cBN and the cemented carbide serving as the base material, and thus, a crack appears in the cBN sintered compact during the cooling process after joining. In addition, this is also probably because the metal binder in the cBN sintered compact or the diamond sintered compact forms the liquid phase at a temperature of 1000°C or higher, and a crack appears in the cBN sintered compact or the diamond sintered compact.

In the present invention, however, the joining material that forms the liquid phase at a temperature lower than 1000°C is used. Therefore, even when the cemented carbide is joined to the cBN sintered compact or the diamond sintered compact including the metal binder such as Co and/or the sintered compact having a high cBN content exceeding 70%, thermal load applied to the cBN sintered compact or the diamond sintered compact becomes smaller and the amount of thermal expansion becomes smaller than those in the case of joining at 1000°C or higher. Therefore, thermal stress generated due to the difference in thermal expansion coefficient between the metal binder or the cemented carbide and cBN or diamond becomes smaller, generation of a crack in the cBN sintered compact or the diamond sintered compact becomes unlikely, and excellent joining can be performed. In addition, since the metal binder in the cBN sintered compact or the diamond sintered compact does not form the liquid phase, generation of a crack in the cBN sintered compact or the diamond sintered compact can be prevented.

In the above joined product, the joining material may be a joining material that forms the liquid phase at a temperature of 900°C or higher and lower than 1000°C.

In this way, the joining material that forms the liquid phase at a temperature of 900°C or higher and lower than 1000°C is used, and thus, there can be provided a tool having extremely high heat resistance and joining force.

In the above method for manufacturing a joined product, by the resistance heating, the first material to be joined may generate heat more preferentially than the second material to he joined and may be joined.

In this way, the cemented carbide sintered compact serving as the first material to be joined generates heat more preferentially than the cBN sintered compact or the diamond sintered compact serving as the second material to be joined and is joined. Generally, the cBN sintered compact or the diamond sintered compact has the electrical resistance higher than that of the cemented carbide sintered compact. Therefore, during resistance heating, the cBN sintered compact or the diamond sintered compact serving as the second material to be joined generates heat more preferentially than the cemented carbide sintered compact serving as the first material to be joined, which may lead to degradation in quality (thermal degradation, decomposition, generation of cracks, and the like) of the cBN sintered compact or the diamond sintered compact.

In order to prevent the occurrence of such degradation in quality of the second material to be joined, it is necessary to devise arrangement of the second material to be joined and the joining material as well as a conduction method such that the first material to be joined generates heat more preferentially than the second material to be joined during resistance heating. Specifically, this includes, for example, the use of different materials for the electrode that is in contact with the second material to be joined and the electrode that is in contact with the first material to be joined. By the use of the different materials for the electrodes, heat generation of each of the first material to be joined and the second material to be joined can be controlled because the amount of current flowing through the first material to be joined is different from the amount of current flowing through the second material to be joined. In addition, the second material to be joined may be indirectly heated by more intensive resistance heating of the first material to be joined than the second material to be joined.

In this manner, by devising a conduction path, the first material to be joined can be heated more preferentially than the second material to be joined. Consequently, a portion in the proximity of the joining material can be heated to a high temperature within a short time, more specifically within one minute, for example, and preferably within 30 seconds, without heating the cBN sintered compact or the diamond sintered compact serving as the second material to be joined to a higher temperature than required. Therefore, firm joining becomes possible and the properties of the cBN sintered compact or the diamond sintered compact such as high hardness can be made full use of without degradation in quality (thermal degradation, decomposition, generation of cracks, and the like) of the cBN sintered compact or the diamond sintered compact.

In the above method, by the resistance heating, at least one element of components of the joining material may be diffused into the first material to be joined and/or the second material to be joined.

In this way, since at least one element of the components of the joining material is diffused into the first material to be joined and/or the second material to be joined, the first material to be joined and the second material to be joined can be joined more efficiently, and the joined product having higher joint strength can be obtained.

In the above method the joining material that deforms by resistance heating and pressing may be used for joining.

In this way, since the joining material that deforms by resistance heating and pressing is used, movement of substances along with the deformation of the joining material acts effectively on binding of an interface between the material to be joined and the joining material, and the joined product having high joint strength can be obtained. In addition, since the joining material deforms in accordance with the shape of the material to be joined by resistance heating and pressing, the bonding area can be increased and an effect of enhancing the joint strength can be obtained.

In the above method, the joining material may be made of an alloy including at least one of titan (Ti), zirconium (Zr), cobalt (Co), nickel (Ni), silver (Ag), and copper (Cu).

In this way, the joining material is generally used, which is made of an alloy including at least any one of Ti, Co and Ni used as a binder phase component of the cemented carbide sintered compact serving as the first material to be joined and the cBN sintered compact or the diamond sintered compact serving as the second material to be joined, or Ag, Cu and Zr showing an excellent wetting characteristic with respect to the cBN sintered compact or the diamond sintered compact. Therefore, the joined product having higher joint strength can be obtained.

Such joining material can include, for example, an Ag-Cu alloy, an Ag-Ti alloy, an Ag-Zr alloy, a Cu-Si alloy, a Cu-Ti alloy, a Cu-Zr alloy, an Ni-Ti alloy, an Ni-Zr alloy, a Cu-Mn alloy, an Ni-Zn alloy, and a solid solution thereof, as well as a Cu-Ti-Zr alloy, an Ag-Cu-Ti alloy, an intermetallic compound thereof and the like, for example.

The intermetallic compound may be originally included in the joining material. In addition, the element that configures the intermetallic compound may be included in the joining material in a different state, and the intermetallic compound may be reactively formed during joining. When the intermetallic compound is reactively formed, heat of the reaction can be used for joining, and thus, reactive formation of the intermetallic compound is more effective in joining.

In the above method, the joining material may include titan (Ti).

In this way, the material including Ti that is used as the binder phase component of the cBN sintered compact or the diamond sintered compact serving as the second material to be joined is used as the joining material. Therefore. Ti in the joining material is readily diffused into the first material to be joined and the second material to be joined, and firm joining can be obtained.

In the above joined product, at least a part of the joining material may form the liquid phase during resistance heating.

In this way, at least a part of the joining material forms the liquid phase during resistance heating. Therefore, the elements of the components of the joined product are readily diffused into the first material to be joined and the second material to be joined, and the first material to be joined and the second material to be joined can be firmly joined.

In the above method the joining material and/or a binder phase of the first material to be joined may have a nickel (Ni) content of 30 vol% (percentage by volume) or less.

The reason why the joining material and/or the binder phase of the first material to be joined has a nickel (Ni) content of 30 vol% or less is that, when the nickel content exceeds 30 vol%, there is a high possibility that the joining material and the first material to be joined react with chlorine gas used as a CVD coating material and a CVD film grows abnormally when the CVD coating is applied to the joined product for the purpose of enhancing the wear resistance.

In the above method, the joining material may be provided on a surface of the first material to be joined and/or the second material to be joined, by a plating method.

In this way, the joining material is provided on the surface of the first material to be joined and/or the second material to be joined, by the plating method. In the plating method, the thickness of the joining material is readily controlled as compared with a case where the joining material is applied in the form of powder or paste, and the thickness can be readily controlled to 50 µm or smaller. Consequently, the thickness of the joining material after joining can become 30 µm or smaller, and preferably 10 µm or smaller at the time of resistance heating and pressing, and the joining quality can be stabilized. Furthermore, when such configuration is applied to mass production of the joined product, automation of steps is easy, and thus, the configuration is preferable in terms of cost and stabilization of quality.

In the above method, the joining material may be provided on a surface of the first material to be joined and/or the second material to be joined, by a physical vapor deposition method.

In this way, the joining material is provided on the surface of the first material to be joined and/or the second material to be joined, by the physical vapor deposition method. In the physical vapor deposition method, the thickness of the joining material is readily controlled as compared with a case where the joining material is applied in the form of powder or paste, and the thickness can be readily controlled to 50 µm or smaller. Consequently, the thickness of the joining material after joining can become 30 µm or smaller, and preferably 10 µm or smaller at the time of resistance heating and pressing, and the joining quality can be stabilized. Furthermore, when such configuration is applied to mass production of the joined product, mechanization and automation are easy, and thus, the configuration is preferable in terms of cost and stabilization of quality. Film forming by a sputtering method or an arc vapor deposition method is especially preferable.

In the above method, the joined product may be a cutting tool.

In this way, since the joined product includes, as the materials to be joined, the cemented carbide sintered compact serving as the first material to be joined and the cBN sintered compact or the diamond sintered compact serving as the second material to be joined, the joined product obtained by joining the first material to be joined and the second material to be joined by the above joining material can be suitably used as the cutting tool. Specifically, the cutting tool can include, for example, a cutting insert, and a rotating tool such as a drill, an end mill and a reamer. In the present invention, there can be provided a cutting tool that does not cause a reduction in joint strength of the joining material even in high-speed cutting during which the temperature at which the brazing filler forms the liquid phase is exceeded.

As described above, in the present invention, there can be provided a tool that can make full use of the properties of the cBN sintered compact or the diamond sintered compact such as high hardness without degradation in quality (thermal degradation, decomposition, generation of cracks, and the like) of the cBN sintered compact or the diamond sintered compact that is a high-pressure-stable-type material. In particular, the tool of the present invention is preferable because the tool can be suitably provided as a tool such as a wear resistant tool, a mine and civil engineering tool, and a cutting tool.

In addition, in the present invention, the second material to be joined can be joined to the first material to be joined, without necessarily requiring a back metal (a thin cemented carbide layer provided on the opposite side of a cut surface). A joined product of the first material to be joined and the second material to be joined that has the back metal, however, is not excluded from the present invention.

### ADVANTAGEOUS EFFECTS OF INVENTION

According to the present invention, there can be provided a method for manufacturing a joined product that does not cause a reduction in joint strength of a joining layer even if a high temperature exceeding a temperature at which a brazing filler forms the liquid phase is reached during cutting, that does not require preparation of a cBN sintered compact or a diamond sintered compact having large grinding allowance, and further, that is suitable as a cutting tool even when the cBN sintered compact or the diamond sintered compact in which a crack readily appears during joining is joined.

### BRIEF DESCRIPTION OF DRAWINGS

Fig. 1 is a conceptual view illustrating one manner of conduction in joining by resistance heating and pressing which is not part of the present invention.
Fig. 2 is a conceptual view illustrating another manner of conduction in joining by resistance heating and pressing.
Fig. 3 is a conceptual view illustrating one manner in joining by resistance heating and pressing of a rotating tool.
Fig. 4 is a conceptual view illustrating another manner in joining by resistance heating and pressing of the rotating tool.

### DESCRIPTION OF EMBODIMENTS

The modes for carrying out the present invention will be described hereinafter based on the examples that will be described below. It is noted that the present invention is not limited to the following embodiments.

### (As to Conduction in Joining by Resistance Heating and Pressing)

First, manners of conduction in joining by resistance heating and pressing will be described by using the figures.

### 1. First Manner of Conduction

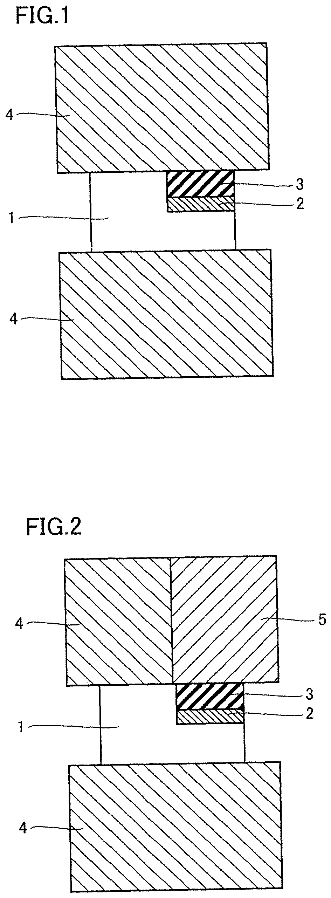

Fig. 1 is a conceptual view illustrating one manner of conduction in joining by resistance heating and pressing which is not part of the present invention. In Fig. 1, materials 1 and 3 to be joined are a first material to be joined (a cemented carbide sintered compact) and a second material to be joined (a cBN sintered compact or a diamond sintered compact), respectively, and materials 1 and 3 to be joined are joined by means of a joining material 2 sandwiched therebetween.

Specifically, materials 1 and 3 to be joined and joining material 2 are sandwiched by electrodes (graphite) 4. Pressure is applied to materials 1 and 3 to be joined, joining material 2 and electrodes 4. and a current is passed through electrodes 4. Since electrodes 4 span both material 1 to be joined and material 3 to be joined, an electrical circuit can be formed, by which a current sufficient for joining is passed through the material to be joined that has lower electrical resistance, even when any one of the materials to be joined has high electrical resistance.

A material that forms the liquid phase at a temperature exceeding 800°C and lower than 1000°C by resistance heating is used as joining material 2.

The passage of the current through electrodes 4 causes resistive heat generation of materials 1 and 3 to be joined and joining material 2, and as a result, materials 1 and 3 to be joined are joined. It is noted that two electrodes 4 are, as a matter of course, made of a material having conductivity and are desirably made of a material that does not react with materials 1 and 3 to be joined, and further, joining material 2. Even when two electrodes 4 are made of a material that reacts with materials 1 and 3 to be joined and joining material 2. reaction with the electrodes can be suppressed by arranging a carbon sheet between electrodes 4 and materials 1 and 3 to be joined.

### 2. Second Manner of Conduction

Fig. 2 is a conceptual view illustrating another manner of conduction in joining by resistance heating and pressing. In Fig. 2, a split electrode 5 is in contact with second material 3 to be joined, and electrode 4 is in contact with first material 1 to be joined. By using different materials for electrode 4 and split electrode 5, the electrical conductivity and the thermal conductivity thereof can be changed. In addition, different currents can be applied to the first material to be joined and the second material to be joined, respectively, and the temperature thereof can be extremely changed. As a result, even a material to be joined that is prone to thermal degradation can be joined without thermal degradation. Furthermore, by splitting the electrode and pressing each electrode independently, the pressure applied to the first material to be joined and the second material to be joined can be controlled with high precision, and thus, the joint strength can be enhanced. Therefore, splitting of the electrode is preferable.

### 3. Third Manner of Conduction

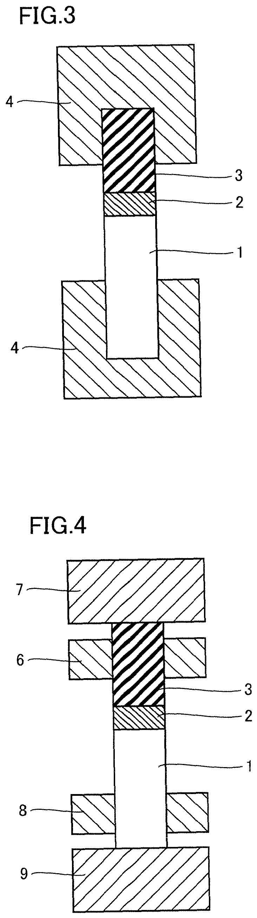

Fig. 3 is a conceptual view illustrating one manner in joining by resistance heating and pressing of a rotating tool. In Fig. 3. material 1 to be joined and material 3 to be joined are arranged with joining material 2 interposed therebetween, and electrodes 4 are in contact with the respective materials to be joined. By applying a voltage between the electrodes, a current passes through materials 1 and 3 to be joined and joining material 2, which causes heating, thereby joining material 1 to be joined and material 3 to be joined. In order to pass a current sufficient for heating, it is preferable that electrode 4 is in contact with materials 1 and 3 to be joined as close as possible. When material 3 to be joined has high electrical resistance, a material having low electrical resistance is added in advance to a part of material 3 to be joined. As a result, a current path can be ensured and the current sufficient for joining can be passed. It is preferable that electrode 4 is in close contact with materials 1 and 3 to be joined.

### 4. Fourth Manner of Conduction

Fig. 4 is a conceptual view illustrating another manner in joining by resistance heating and pressing of the rotating tool. In Fig. 4, material 1 to be joined and material 3 to be joined are arranged with joining material 2 interposed therebetween, and the electrodes are in contact with the respective materials to be joined. Unlike the third manner of conduction, the electrodes are divided into an electrode 7 and an electrode 9 for both conduction and pressing, and an electrode 6 and an electrode 8 mainly for conduction. As a result, even when materials 1 and 3 to be joined have high electrical resistance, a current can be preferentially passed from electrode 6 and electrode 8 through a portion of materials 1 and 3 to be joined to which the material having low electrical resistance has been added, and only a portion that requires pressing and heating can be pressed and heated. It is noted that electrode 7 may be in contact with electrode 6 and electrode 9 may be in contact with electrode 8. In addition, a current may not be passed through electrode 7 and electrode 9. Furthermore, a configuration in which the position of electrode 6 and electrode 8 as well as the amount of current passing through electrode 6 and electrode 8 can be adjusted independently of each other is preferable because the configuration allows coping with a change in shape and properties. Moreover, electrodes 6 to 9 may be all made of the same material, may be partially made of different materials, or may be all made of different materials. Alternatively, only a portion that is in contact with materials 1 and 3 to be joined may be made of a different material.

### (As to Joining through the Use of Joining by Resistance Heating and Pressing)

Next, joining by resistance heating and pressing through the use of conduction shown in above Figs. 1 to 4 will be described.

Conduction conditions are determined as appropriate depending on the materials and the like of the used material to be joined and the used joining material. It is preferable that the conduction time is within one minute, in particular within approximately 30 seconds so as not to cause deformation or melting of the material of the material to be joined as well as bulking of particles in a portion other than a portion in the proximity of the joining material.

As a manner of the joining material for joining by resistance heating and pressing, a method for coating the first material to be joined and the second material to be joined by a plating method or a physical vapor deposition method can be employed, in addition to a method for applying the joining material in the form of powder or paste onto the surface of the first material to be joined and/or the second material to be joined. The method for coating the first material to be joined and the second material to be joined by the plating method or the physical vapor deposition method is especially preferable for stabilization of the joint strength because the method facilitates handling of the materials to be joined after the materials to be joined are coated with the joining material, is advantageous in automation of the joining step, and facilitates control over the thickness of a coating film.

By resistance heating and pressing, the joining material readily deforms, adhesion between the joining material and the material to be joined is enhanced, and element diffusion readily occurs. Consequently, the joint strength can be dramatically enhanced. In particular, when the joined product of the present invention is applied to a cutting tool, for example a cutting insert, a joint surface of the first material to be joined and the second material to be joined, which serve as base materials, points in two directions of the vertical direction and the horizontal direction in Fig. 1, and it is necessary to tightly join the first material to be joined and the second material to be joined in both directions. In this case, pressing from the two directions is preferable.

Excessively weak pressing force is inappropriate because the pressing force causes an increase in the contact resistance between the electrode and the material to be joined and a current cannot be passed or electrical discharge occurs. Excessively strong pressing force is also inappropriate because the pressing force causes deformation of the cemented carbide sintered compact. In the present invention, the pressing force of 0.1 to 200 MPa is appropriate.

As an atmosphere during joining, joining in a vacuum or in inert gas or in a reducing atmosphere is desirable, because both of the material to be joined and the joining material include a metal. Although the degree of vacuum is not particularly limited, it is desirable that the degree of vacuum is higher than 13.3 Pa (0.1 Torr). The inert gas can include argon, helium, nitrogen, or a mixed gas thereof. The reducing atmosphere can include a gas atmosphere in which a small proportion of hydrogen gas is mixed with the above inert gas, and a method for placing heated graphite in the proximity of the material to be joined.

As a manner of the current that is passed through, a direct current and an alternating current can be both used if the current allows heating of the material to be joined and the joining material to an appropriate temperature. In particular, since the peak current value and the ratio between ON and OFF of the pulse of a pulsed direct current can be changed, a joint interface can be instantaneously heated and the overall temperature control range of the body to be joined can be widened. Therefore, the pulsed direct current is effective in joining.

### (Examples 1 to 6 and Comparative Examples 1 and 2)

The present examples and comparative examples are related to the relationship among the pressing force, the joint strength and deformation of the material to be joined during joining.

As shown in Fig. 1, a cBN insert (second material to be joined) with a triangular back metal having a surface coated with Ni-7 wt% P (melting point: about 900°C) plating of a thickness of 1 0 µm was set on a base (first material to be joined) made of cemented carbide and having a counterbore, and joining by resistance heating and pressing was performed in a vacuum in a state where the pressures of 0.05 MPa (Comparative Example 1), 0.1 MPa (Example 1). 10 MPa (Example 2), 30 MPa (Example 3), 70 MPa (Example 4), 100 MPa (Example 5), 200 MPa (Example 6), and 250 MPa (Comparative Example 2) were applied in the vertical direction, respectively. As a result, joined products of Examples 1 to 6 and Comparative Examples 1 and 2 were obtained. It is noted that graphite was used as an electrode and a graphite sheet was inserted between the electrode and the material to be joined in order to prevent reaction with the electrode. The pulsed direct current was passed through under the conditions of 1900 A of the pulsed current value, 1:1 of the ratio between ON and OFF of the pulse, 10 ms of the pulse width, 10 seconds of the conduction time, 0.98 kN of the load, and the melting point of the joining material or higher and lower than 1000°C of the temperature of the joined product. It is noted that two types of WC-5% Co (a material A to be joined) and WC-10% Co (a material B to be joined) (both are expressed in wt% (percentage by mass)) were used as the base (first material to be joined) made of cemented carbide.

The joint strength (shear fracture strength) of each of the obtained joined products was measured, and in addition, the presence or absence of deformation of each material to be joined in the proximity of a joining layer was observed. The result is shown in Table 1.

**[Table 1]**

| Sample | Comparative Example 1 | Example 1 | Example 2 | Example 3 | Example 4 | Example 5 | Example 6 | Comparative Example 2 |
|---|---|---|---|---|---|---|---|---|
| Pressing Force (MPa) | 0.05 | 0.1 | 10 | 30 | 70 | 100 | 200 | 250 |
| Joint Strength of A (MPa) | not joined | 110 | 130 | 290 | 300 | 320 | 360 | unmeasurable |
| Joint Strength of B (MPa) | not joined | 115 | 140 | 300 | 310 | 310 | unmeasurable | unmeasurable |
| Deformation of Material A to be Joined | not deformed | not deformed | not deformed | not deformed | not deformed | not deformed | not deformed | deformed |
| Deformation of Material B to be Joined | not deformed | not deformed | not deformed | not deformed | not deformed | not deformed | deformed | deformed |

As shown in Table 1, when the pressing force was 0.1 to 100 MPa (Examples 1 to 5), the strength equal to that of a conventional brazed product was obtained and deformation of the material to be joined was not recognized. In addition, when the pressing force was 100 to 200 MPa, deformation was not recognized depending on the composition of the material to be joined. When the pressing force was extremely low (Comparative Example 1), however, joining did not occur, and when pressing was performed at the pressing force exceeding 200 MPa (Comparative Example 2), deformation occurred at the material to be joined in the proximity of the joining layer, regardless of the composition of the material to be joined. Consequently, it was confirmed that the preferable pressing force was 0.1 to 200 MPa in the present invention.

### (Example 7)

Next, a Ti-50 wt% Cu layer (melting point: about 960°C) having a thickness of 5 µm was provided at the cBN (second material to be joined) with the back metal by using, instead of plating, a sputtering method that is the physical vapor deposition method, and the cBN was joined to the cemented carbide base (first material to be joined). At this time, aforementioned material A to be joined and material B to be joined were used as the cemented carbide base (first material to be joined), and the joining conditions were the same as those of Example 3. Consequently, it was confirmed that the cBN and the cemented carbide were joined without any void, with the Ti-Cu layer interposed therebetween. This is supposed to be because the liquid phase was formed during joining. It is noted that the joint strength of material A to be joined was 250 MPa and the joint strength of material B to be joined was 270 MPa.

Next, the joined product of Example 3 and the joined product of Example 7 in which materials A and B were used as the first material to be joined underwent grinding processing with a diamond grindstone, respectively, and then, were coated with TiCN having a thickness of 5 µm at the coating temperature of 870°C by using the known CVD method, and growth of a CVD film was observed. Consequently, in the joined product of Example 3 in which the joining material was Ni-P, abnormal growth of the CVD film was seen regardless of the type of the first material to be joined. On the other hand, in the joined product of Example 7 in which the joining material was not Ni-P but Ti-Cu, abnormal growth of the CVD film was not seen regardless of the type of the first material to be joined.

### (Example 8)

Next, a material (joining material) formed by dissolving 50 vol% Cu-25 vol% Ti-25 vol% Zr powders (melting point: about 850°C) in a solvent was applied to the cemented carbide base (material A to be joined: first material to be joined), and a cBN insert (second material to be joined) without the back metal was set, and joining by resistance heating and pressing was performed under the same conduction conditions as those of Example 3. It was confirmed that the joint strength of this joined product was 210 MPa, which was equal to that of the conventional brazed product. A dense Cu-Ti-Zr layer having a thickness of 20 µm was observed in this joint portion, and it was confirmed that the Cu-Ti-Zr powders were melted or sintered.

### (Example 9)

Next, based on above Example 8, for the purpose of shortening the conduction time, the conduction time among the conditions described in Example 8 was changed to determine the joining conditions. Consequently, when the conduction time was changed from 10 seconds in Example 8 to 8 seconds, excellent joining was possible at a current whose pulsed current value was larger by 200 A than the current value (1900 A) described in Example 8. Furthermore, when the conduction time was changed to 6 seconds, excellent joining was possible by further increasing the pulsed current by 200 A.

### (Example 10)

Next, in order to achieve accurate joining at a back surface of the cBN (second material to be joined) as well, joining was performed while pressure was applied from two directions. The pressure was applied in the vertical direction by the upper and lower electrodes as in the above-described examples, and a load was separately applied from the side to allow pressing of the cBN in the horizontal direction. It is noted that material A to be joined was used as the first material to be joined. The cBN with the back metal coated with the Ni-P plating that is the same as the cBN used in Example 3 was used, and joining was performed under the conditions of 3000 A of the pulsed current, 1:4 of the ratio between ON and OFF of the pulse, and 10 seconds of the conduction time.

Consequently, not only the bottom surface but also the back surface of the cBN was joined to the cemented carbide base with the Ni-P layer interposed therebetween. The joint strength at this time was 320 MPa, and the joint strength higher than the joint strength obtained during pressing only in the vertical direction was obtained.

### (Example 11)

Next, the upper electrode of the electrodes for resistance heating and pressing was split, and different materials were used for the electrode for pressing the cemented carbide base (material A to be joined: first material to be joined) and the electrode for pressing the cBN without the back metal (second material to be joined). As a result, a different current flows through each electrode and the value of the current flowing through the cemented carbide base also becomes different from the value of the current flowing through the cBN. Consequently, the temperature of the cemented carbide base and the cBN can be extremely changed and the temperature of the cBN, in which degradation at a high temperature is a concern, can be reduced.

Graphite was used as the electrode for resistance heating and pressing of the cemented carbide base, and hBN was used as the electrode for resistance heating and pressing of the cBN. The hBN is an electrically-insulated material and little current flows through the hBN. The cBN was coated with 69 vol% Ag-26 vol% Cu-5 vol% Ti (melting point: about 820°C) having a thickness of 10 µm by the sputtering method. An experiment was conducted under the conditions of 2500 A of the pulsed current, 1:2 of the ratio between ON and OFF of the pulse, 10 ms of the pulse width, 10 seconds of the conduction time, and 0.98 kN of the load, and as a result, joining without thermal degradation of the cBN was possible. This is supposed to be because little current flew through the cBN and the cBN itself did not cause joule heat generation while the cemented carbide base was preferentially heated, thereby allowing joining without increasing the temperature of the cBN. It is noted that the joint strength was 200 MPa, which was equal to that of the conventional brazed product.

### (Example 12)

A joined product was obtained similarly to Example 11, except that an unsplit electrode was used as the upper electrode. The joint strength of the obtained joined product was 250 MPa, which was equal to the joint strength of the conventional brazed product and higher than the joint strength in Example 11. A part of the cBN of the obtained joined product, however, had cracks and degradation in quality due to heat was seen.

Based on the results of Examples 11 and 12, it was confirmed that the joined product having high joint strength without thermal degradation of the cBN (second body to be joined) was able to be obtained by controlling electric power supply to the cBN (second body to be joined) and preferentially heating the cemented carbide (first body to be joined).

### (Example 13)

Next, the electrode for pressing the cBN (second material to be joined) was made of a conductive material, instead of the insulating hBN described in Example 11. Here, a material having the electrical conductivity higher than that of the electrode for pressing the cemented carbide base (first material to be joined) was used. As a result, different currents were able to flow through the cemented carbide base and the cBN, such that the current flowing through the cemented carbide base was able to heat the base in the proximity of the cBN and the current flowing through the cBN was able to preferentially heat the joining material.

Specifically, the current of about 1900 A was passed through the cemented carbide base and the current of about 1000 A was passed through the cBN (the current values are estimated values) for joining by resistance heating and pressing. At this time, a difference between the depth of the counterbore of the cemented carbide base and the height of the cBN was 0.1 mm, and by using the split electrode, pressing of both the cemented carbide base and the cBN was possible even when a gap was large. As a result of conduction, firm joining was possible without degradation of the cBN.

### REFERENCE SIGNS LIST

1 first material to be joined: 2 joining material; 3 second material to be joined; 4, 6, 7, 8, 9 electrode; 5 split electrode

## Claims

1. Method for manufacturing a joined product comprising a cemented carbide sintered compact serving as a first material (1) to be joined and a cBN sintered compact or a diamond sintered compact serving as a second material (3) to be joined, said first material (1) to be joined and said second material (3) to be joined being joined by a joining material (2) that forms a liquid phase at a temperature exceeding 800°C and lower than 1000°C and that is placed between said first material (1) to be joined and said second material (3) to be joined, and said first material (1) to be joined and said second material (3) to be joined being joined by resistance heating and pressing at a pressure of 0.1 to 200 MPa, wherein by the resistance heating, said first material (1) to be joined generates heat more preferentially than said second material (3) to be joined and is joined.

2. Method according to claim 1, wherein said joining material (2) is a joining material that forms the liquid phase at a temperature of 900°C or higher and lower than 1000°C.

3. Method according to claim 1, wherein by the resistance heating, at least one element of components of said joining material (2) is diffused into said first material (1) to be joined and/or said second material (3) to be joined.

4. Method according to claim 1, wherein the joining material (2) that deforms by resistance heating and pressing is used for joining.

5. Method according to claim 1, wherein said joining material (2) is made of an alloy including at least one of titan (Ti), zirconium (Zr), cobalt (Co), nickel (Ni), silver (Ag), and copper (Cu).

6. Method according to claim 5, wherein said joining material (2) includes titan (Ti).

7. Method according to claim 1, wherein at least a part of said joining material (2) forms the liquid phase during resistance heating.

8. Method according to claim 1, wherein said joining material (2) and/or a binder phase of said first material (1) to be joined has a nickel (Ni) content of 30 vol% (percentage by volume) or less.

9. Method according to claim 1, wherein said joining material (2) is provided on a surface of said first material (1) to be joined and/or said second material (3) to be joined, by a plating method.

10. Method according to claim 1, wherein said joining material (2) is provided on a surface of said first material (1) to be joined and/or said second material (3) to be joined, by a physical vapor deposition method.

11. Method according to claim 1, wherein said joined product is a cutting tool.

## Patentansprüche

1. Verfahren zur Herstellung eines verbundenen Produkts, das einen Hartmetall- Sinterpresskörper, der als ein zu verbindendes erstes Material (1) dient, und einen cBN-Sinterpresskörper oder einen Diamant-Sinterpresskörper, der als ein zu verbindendes zweites Material (3) dient, umfasst, wobei das zu verbindende erste Material (1) und das zu verbindende zweite Material (3) mit einem Verbindungsmaterial (2) verbunden werden, das bei einer Temperatur von mehr als 800 °C und weniger als 1000 °C eine Flüssigphase bildet und zwischen dem zu verbindenden ersten Material (1) und dem zu verbindenden zweiten Material (3) angeordnet ist, und wobei das zu verbindende erste Material (1) und das zu verbindende zweite Material (3) durch Widerstandsheizen und Pressen mit einem Druck von 0,1 bis 200 MPa verbunden werden, wobei durch das Widerstandsheizen das zu verbindende erste Material (1) mehr Wärme als das zu verbindende zweite Material (3) erzeugt und verbunden wird.

2. Verfahren nach Anspruch 1, wobei das Verbindungsmaterial (2) ein Verbindungsmaterial ist, das die Flüssigphase bei einer Temperatur von 900 °C oder mehr und weniger als 1000 °C bildet.

3. Verfahren nach Anspruch 1, wobei durch das Widerstandsheizen mindestens ein Element der Komponenten des Verbindungsmaterials (2) in das zu verbindende erste Material (1) und/oder das zweite Material (3) diffundiert.

4. Verfahren nach Anspruch 1, wobei das Verbindungsmaterial (2), das sich durch Widerstandsheizen und Pressen verformt, zum Verbinden verwendet wird.

5. Verfahren nach Anspruch 1, wobei das Verbindungsmaterial (2) aus einer Legierung hergestellt ist, die Titan (Ti) und/oder Zirkonium (Zr) und/oder Kobalt (Co) und/oder Nickel (Ni) und/oder Silber (Ag) und/oder Kupfer (Cu) enthält.

6. Verfahren nach Anspruch 5, wobei das Verbindungsmaterial (2) Titan (Ti) enthält.

7. Verfahren nach Anspruch 1, wobei wenigstens ein Teil des Verbindungsmaterials (2) beim Widerstandsheizen die Flüssigphase bildet.

8. Verfahren nach Anspruch 1, wobei das Verbindungsmaterial (2) und/oder eine Binderphase des zu verbindenden ersten Materials (1) einen Nickel (Ni)-Gehalt von 30 Vol.% (Volumenprozent) oder weniger aufweist.

9. Verfahren nach Anspruch 1, wobei das Verbindungsmaterial (2) durch ein Plattierungsverfahren auf einer Oberfläche des zu verbindenden ersten Materials (1) und/oder des zu verbindenden zweiten Materials (3) gebildet wird.

10. Verfahren nach Anspruch 1, wobei das Verbindungsmaterial (2) durch ein physikalisches Dampfabscheidungsverfahren auf einer Oberfläche des zu verbindenden ersten Materials (1) und/oder des zu verbindenden zweiten Materials (3) gebildet wird.

11. Verfahren nach Anspruch 1, wobei das verbundene Produkt ein Schneidwerkzeug ist

## Revendications

1. Procédé de fabrication d'un produit joint comprenant un compact fritté en carbure cémenté servant de premier matériau (1) à joindre et un compact fritté en cBN ou un fritté en diamant servant de second matériau (3) à joindre, ledit premier matériau (1) à joindre et ledit second matériau (3) à joindre étant assemblé par un matériau de jonction (2) qui forme une phase liquide à une température supérieure à 800°C et inférieure à 1000°C et qui est placé entre ledit premier matériau (1) à joindre et ledit second matériau (3) à joindre, et ledit premier matériau (1) à joindre et ledit second matériau (3) à joindre étant assemblés par chauffage par résistance et compression à une pression de 0,1 à 200 MPa, dans lequel par chauffage par résistance, le premier matériau (1) à joindre génère de la chaleur de manière plus préférentielle que ledit second matériau (3) à joindre, et que ledit premier matériau est joint.

2. Procédé selon la revendication 1, dans lequel ledit matériau de jonction (2) est un matériau de jonction qui forme la phase liquide à une température de 900°C ou supérieure et inférieure à 1000°C.

3. Procédé selon la revendication 1, dans lequel par chauffage par résistance, au moins un élément parmi les composants dudit matériau de jonction (2) est diffusé dans ledit premier matériau (1) à joindre et/ou ledit second matériau (3) à joindre.

4. Procédé selon la revendication 1, dans lequel on utiliser pour l'assemblage le matériau de jonction (2) qui se déforme par chauffage par résistance et compression.

5. Procédé selon la revendication 1, dans lequel ledit matériau de jonction (2) est constitué d'un alliage comprenant au moins un élément par le titane (Ti) le zirconium (Zr), le cobalt (Co), le nickel (Ni), l'argent (Ag) et le cuivre (Cu).

6. Procédé selon la revendication 5, dans lequel ledit matériau de jonction (2) comprend le titane (Ti).

7. Procédé selon la revendication 1, dans lequel au moins une partie dudit matériau de jonction (2) forme la phase liquide pendant le chauffage par résistance.

8. Procédé selon la revendication 1, dans lequel ledit matériau de jonction (2) et/ou une phase de liaison dudit premier matériau (1) à joindre comporte une teneur en nickel (Ni) inférieure ou égale à 30% en volume (pourcentage en volume).

9. Procédé selon la revendication 1, dans lequel ledit matériau de jonction (2) est prévu sur une surface dudit premier matériau (1) à joindre et/ou ledit second matériau (3) à joindre, par un procédé de placage.

10. Procédé selon la revendication 1, dans lequel ledit matériau de jonction (2) est prévu sur une surface dudit premier matériau (1) à joindre et/ou ledit second matériau à joindre, par un procédé de dépôt physique en phase vapeur.

11. Procédé selon la revendication 1, dans lequel ledit produit joint est un outil de de découpe.
